# EUROPÄISCHE PATENTANMELDUNG

(11) **EP 1 916 876 A1**
(43) Veröffentlichungstag der Anmeldung: **30.04.2008**
(21) Anmeldenummer: 07020565.3
(22) Anmeldetag: 20.10.2007
(51) Int. Cl.: H05B 6/44, H05B 6/36, H05B 6/12

(54) **Induktionsheizeinrichtung**

(30) Priorität: 23.10.2006 DE 202006016551 U
(71) Anmelder: E.G.O. ELEKTRO-GERÄTEBAU GmbH, 75038 Oberderdingen (DE)
(72) Erfinder: Schilling, Wilfried, 76703 Kraichtal (DE)
(74) Vertreter: Patentanwälte Ruff, Wilhelm, Beier, Dauster & Partner

(57) **Zusammenfassung**

Eine Induktionsheizeinrichtung (11) weist zwei voneinander beabstandete, größere Induktionsspulen (14, 17) und mindestens eine dritte kleinere Induktionsspule (20) auf. Die dritte kleinere Induktionsspule (20) nimmt den Zwischenraum zwischen den größeren Induktionsspulen (14, 17) im wesentlichen ein, wobei die Induktionsspulen (14, 17, 20) einzeln bzw. wechselseitig ansteuerbar bzw. betreibbar sind.

## Beschreibung

Die Erfindung betrifft eine Induktionsheizeinrichtung gemäß dem Oberbegriff des Anspruchs 1.

Aus der DE 26 53 389 A1 ist es bekannt, zwei runde Kochstellen mit Strahlungsheizkörpern in einem Abstand zueinander an einem Kochfeld vorzusehen. Die beiden Strahlungsheizkörper weisen dabei unterschiedliche Größen auf. Zwischen ihnen befindet sich ein dem Zwischenraum in etwa angepasster dritter Strahlungsheizkörper. So ergibt sich eine längliche, in Wesentlichen durchgehende Kochzone bei gleichzeitigem Betrieb aller drei Strahlungsheizkörper. Ähnliche Heizeinrichtungen sind auch aus der DE 32 04 543 C2 und DE 32 34 767 C2 bekannt.

### Aufgabe und Lösung

Der Erfindung liegt die Aufgabe zugrunde, eine eingangs genannte Induktionsheizeinrichtung zu schaffen, die erweiterte Funktionalitäten aufweist und vor allem eine vielseitigere Verwendung eines Induktionskochfeldes ermöglicht.

Gelöst wird diese Aufgabe durch eine Induktionsheizeinrichtung mit den Merkmalen des Anspruchs 1. Vorteilhafte sowie bevorzugte Ausgestaltungen der Erfindung sind Gegenstand der weiteren Ansprüche und werden im Folgenden näher erläutert. Der Wortlaut der Ansprüche wird durch ausdrückliche Bezugnahme zum Inhalt der Beschreibung gemacht.

Die Induktionsheizeinrichtung weist zwei größere Induktionsspulen auf, mit einem Abstand zwischen sich. Dieser Abstand kann beispielsweise in der Größenordnung einer der größeren Induktionsspulen selber liegen oder vorteilhaft darunter liegen, beispielsweise etwa halb so groß. Mindestens eine dritte kleinere Induktionsspule ist in dem Zwischenraum zwischen den beiden größeren Induktionsspulen angeordnet und nimmt diesen Zwischenraum im Wesentlichen ein. Erfindungsgemäß ist vorgesehen, dass die Induktionsspulen jeweils einzeln bzw. wechselseitig ansteuerbar sind und so betrieben werden können, wobei sie auch unterschiedlich gemeinsam bzw. gleichzeitig betrieben werden können. Dadurch ist es möglich, nicht nur mittels Strahlungsheizkörpern eine flächenmäßige Zusammenschaltung zu einer größeren Kochzone zu erreichen, sondern auch mit Induktionsspulen bzw. einer Induktionsheizeinrichtung. So wird vor allem die Verwendung von Induktionsspulen beim sogenannten induktiven Kochen erweitert.

Einerseits können die Induktionsspulen rund sein bzw. in etwa kreisförmig oder auch oval. Vorteilhaft sind sie aber in etwa viereckig, wobei an den Ecken ein gewisser Biegeradius für die Spulen bzw. den Spulendraht vorgesehen sein kann. Vorteilhaft sind sie regelmäßig viereckig bzw. rechteckig. So ist die Bildung einer gleichförmigen Kochzone möglich im zusammengeschalteten bzw. gleichzeitig betriebenen Zustand. Vor allem können die beiden größeren Induktionsspulen in etwa quadratisch sein. Des weiteren können sie vorteilhaft gleich ausgebildet sein, insbesondere bezüglich ihrer Fläche und/oder ihrer Leistung. Wenn die beiden größeren Induktionsspulen sogar identisch sind, ist die Verwendung gleicher Typen möglich, was den Herstellungsaufwand und die Typenvielfalt reduziert. Die dritte kleinere Induktionsspule kann wegen der geringeren Leistung anders aufgebaut sein.

In weiterer Ausgestaltung der Erfindung ist es möglich, dass die drei Induktionsspulen eine Fläche bedecken, die einen im Wesentlichen regelmäßigen Verlauf hat, vorteilhaft viereckig ist. Insbesondere bilden die drei Induktionsspulen zusammen ein Rechteck, welches beispielsweise mehr als doppelt so lang wie breit sein kann. Alternativ ist es möglich, dass die mittlere kleinere Induktionsspule etwas breiter ist als die beiden größeren Induktionsspulen und somit zwischen diesen über deren Breite etwas hinaussteht. So ist eine Anpassung an beispielsweise große Bräter für ein Kochfeld möglich, welche selber einen ovalen Verlauf aufweisen.

Gemäß einer ersten grundsätzlichen Ausgestaltung der Erfindung ist es möglich, dass jede Induktionsspule einen eigenen Generator zur Leistungsversorgung aufweist. In diesem Fall sind also für drei Induktionsspulen drei Generatoren zur Leistungsversorgung vorgesehen. Damit kann auf Standardkomponenten zurückgegriffen werden, wie sie für den Einzelbetrieb der jeweiligen Induktionsspule verwendet werden.

Gemäß einer weiteren grundsätzlichen Ausgestaltung der Erfindung ist es möglich, dass zwei oder sogar alle drei Induktionsspulen einen gemeinsamen Generator aufweisen für ihre Leistungsversorgung. Über eine Schalteinrichtung bzw. Verschaltung können die jeweils gewünschten Induktionsspulen an den Generator angeschlossen werden zum Betrieb. Der Vorteil bei dieser Ausgestaltung liegt darin, dass gegenüber einzelnen Generatoren zur Leistungsversorgung der Bauteilaufwand absehbar reduziert sein kann, insbesondere auch Baugröße und Aufwand für Kühlung odgl., da ein solcher gemeinsamer Generator nicht verteilt vorgesehen ist, sondern an einer Stelle sitzt. Insbesondere kann eine mittlere kleine Induktionsspule nicht allein betrieben werden, sondern mit zumindest einer der beiden größeren Induktionsspulen zusammen.

Sind mehrere Generatoren vorgesehen zur Leistungsversorgung von !n-duktionsspulen, so ist es vor allem für einen gemeinsamen Betrieb von großem Vorteil, wenn sie mit gleicher Arbeitsfrequenz arbeiten bzw. auf die gleiche Resonanzfrequenz abgestimmt sind. Dadurch können Geräusche weitgehend vermieden werden bzw. eine Geräuschentwicklung kann stark reduziert werden.

In nochmals weiterer Ausgestaltung der Erfindung ist es vorteilhaft, wenn die mehreren Generatoren an eine einzige Netzphase eines Versorgungsnetzes angeschlossen sind, beispielsweise an einen Dreileiter-Anschluss in einem Haushalt. Vorteilhaft wird hier die Phasenleistung so auf die Heizzonen aufgeteilt, wie die beheizten Flächen der Induktionsspule bzw. deren Leistung zueinander stehen.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Die Unterteilung der Anmeldung in einzelne Abschnitte sowie Zwischen-Überschriften beschränken die unter diesen gemachten Aussagen nicht in ihrer Allgemeingültigkeit.

### Kurzbeschreibung der Zeichnungen

Ausführungsbeispiele der Erfindung sind in den Zeichnungen schematisch dargestellt und werden im Folgenden näher erläutert. In den Zeichnungen zeigen:
- Fig. 1: eine Draufsicht auf eine erfindungsgemäße Induktionsheizeinrichtung mit drei Induktionsspulen und
- Fig. 2 und 3: zwei verschiedene Arten der Ansteuerung der drei Induktionsspulen.

### Detaillierte Beschreibung der Ausführungsbeispiele

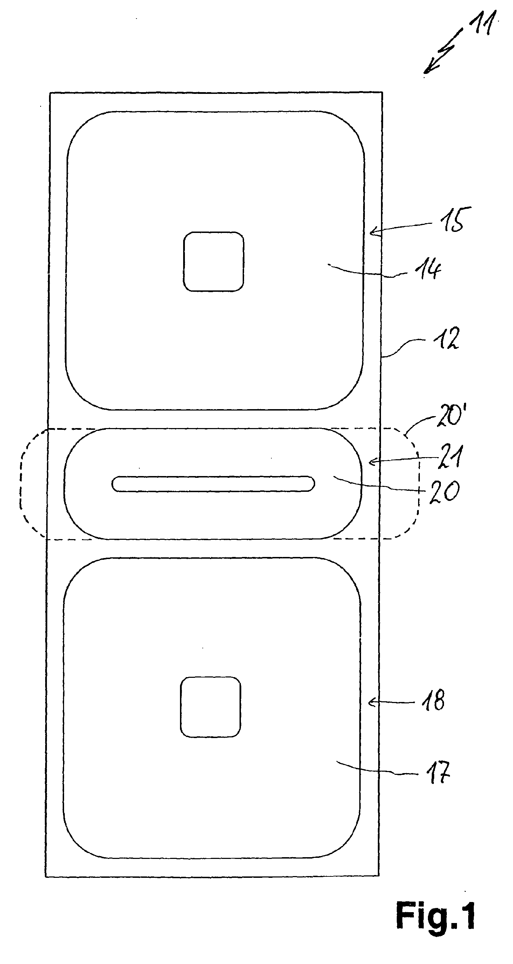

In Fig. 1 ist eine Draufsicht auf eine Induktionsheizeinrichtung 11 dargestellt. Auf einem länglichen Träger 12 sind eine obere Induktionsspule 14, eine untere Induktionsspule 17 und eine dazwischenliegende mittlere Induktionsspule 20 vorgesehen. Es ist zu erkennen, dass die Induktionsspulen 14, 17 und 20 rechteckig ausgebildet sind, wobei die obere Induktionsspule 14 und die untere Induktionsspule 17 gleich groß bzw. identisch und in etwa quadratisch ausgebildet sind. Die mittlere Induktionsspule 20 ist erheblich kleiner ausgebildet und füllt im Wesentlichen den zwischen den anderen beiden Induktionsspulen 14 und 17 liegenden Zwischenraum aus. Vom Aufbau her sind die beiden Induktionsspulen 14 und 17 im Wesentlichen gleich, beispielsweise aus gleichem Spulendraht gewickelt und somit gleich hoch. Die kleinere mittlere Induktionsspule 20 ist für deutlich weniger Leistung ausgelegt und braucht deswegen eine höhere Induktivität, also viele bzw. mehr Windungen aus einem dünneren Draht.

Die obere Induktionsspule 14 bildet eine obere Heizzone 15, die untere Induktionsspule bildet eine untere Heizzone 18 und die mittlere Induktionsspule 20 bildet eine mittlere Heizzone 21. Zu deren unterschiedlicher Ansteuerung wird nachfolgend noch mehr ausgeführt. Der Abstand der beiden großen Induktionsspulen 14 und 17 ist so groß, dass sie in einem üblichen Kochbetrieb bei Einzelbetrieb weit genug auseinander sind, dass sich darauf abgestellte Kochtöpfe nicht gegenseitig stören.

In einer alternativen Ausgestaltungsvariante ist dargestellt, wie die mittlere Induktionsspule 20' gemäß der gestrichelten Umrandung auch breiter sein kann als die beiden größeren Induktionsspulen 14 und 17. Damit kann beispielsweise bei einem gemeinsamen Betrieb eine induktiv beheizte Fläche geschaffen werden, welche der Form eines aufgestellten großen und üblicherweise ovalförmigen Bräters besser entspricht.

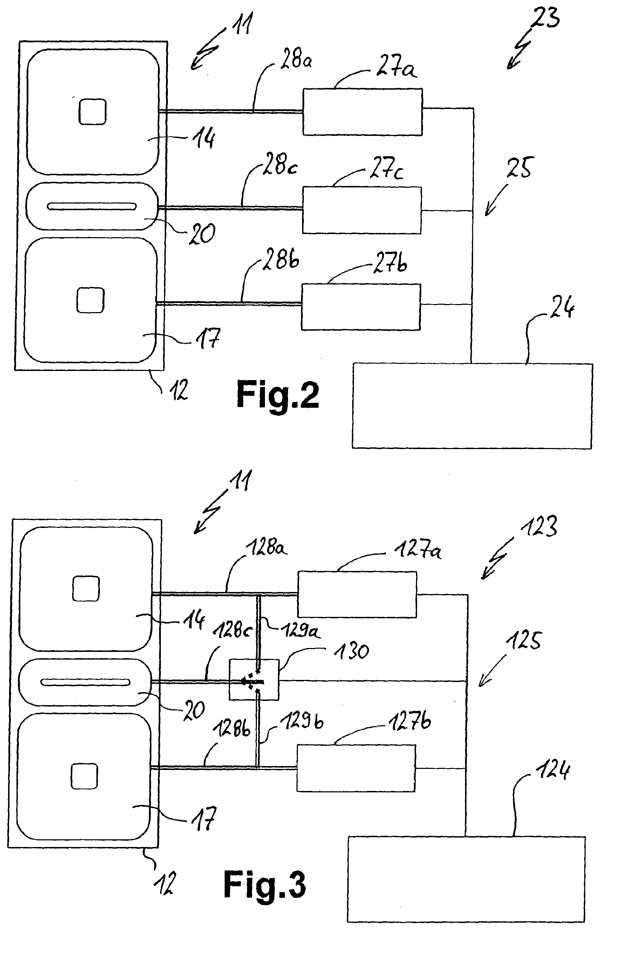

In Fig. 2 ist die Induktionsheizeinrichtung 11 aus Fig. 1 dargestellt und mit einer Ansteuerung 23 verbunden. Die Ansteuerung 23 weist eine Bedienungseinrichtung 24 auf, beispielsweise mit üblichen bekannten Bedienelementen wie Berührungsschaltern odgl. und einer Steuerung. Die Bedienungseinrichtung 24 ist über Steuerleitungen 25 mit drei Frequenzumrichtern 27a bis c verbunden. Über Versorgungsleitungen 28a bis c sind die Frequenzumrichter 27 mit jeweils einer Induktionsspule verbunden zur Leistungsversorgung bzw. Energieversorgung.

Daraus ist erkennbar, dass jede Induktionsspule 14, 17 und 20 ihren eigenen Frequenzumrichter 27 aufweist. Somit kann jeder Frequenzumrichter 27 genau auf diese Induktionsspule abgestimmt sein, sowohl was Leistungsversorgung als auch mögliche Betriebsarten betrifft. Da insbesondere die beiden Induktionsspulen 14 und 17 identisch sind können hier auch identische Frequenzumrichter 27a und 27b verwendet werden. Wenn diese üblichen Standardkomponenten entsprechen, so braucht keine Umrüstung oder neue Bauteilvariante eingeführt zu werden. Die mittlere kleinere Induktionsspule 20 weist ebenfalls einen eigenen Frequenzumrichter 27c auf. Dieser kann ihrer erheblich kleineren Größe entsprechend auch für eine geringere bzw. kleinere Leistungsversorgung ausgelegt sein und so einfacher und kostengünstiger aufgebaut sein. Vor allem kann, ausgehend von der Art des gewünschten Betriebs, den eine Bedienperson an der Bedienungseinrichtung 24 vorgeben kann, sehr einfach ein nahezu optimaler Betrieb der Induktionsspulen 14, 17 und 20 ablaufen.

In Fig. 3 ist eine Abwandlung der Fig. 2 dargestellt. Die Induktionsheizeinrichtung 11 mit den Induktionsspulen 14, 17 und 20 ist wiederum gleich. Ebenso ist wiederum in einer Ansteuerung 123 eine Bedienungseinrichtung 124 vorgesehen, die ähnlich der vorgenannten ausgebildet ist. Sie ist über Steuerleitungen 125 mit zwei Frequenzumrichtern 127a und 127b verbunden sowie einer Schalteinrichtung 130. Die Frequenzumrichter 127a und 127b sind jeweils, ähnlich Fig. 2, über Versorgungsleitungen 128a und 128b mit der Induktionsspule 14 und 17 verbunden.

Die Schalteinrichtung 130 kann, wie durch die gestrichelten Positionen schematisch verdeutlicht werden soll, entweder offen sein, so dass die mittlere Induktionsspule 20 nicht betrieben wird. Wird sie nach oben zu geschlossen, so versorgt der obere Frequenzumrichter 127a über die Zusatz-Versorgungsleitung 129a und die Versorgungsleitung 128c auch die mittlere Induktionsspule 20 mit Leistung. In der nach unten geschlossenen Stellung versorgt der untere Frequenzumrichter 127b über die Zusatz-Versorgungsleitung 129b und die Versorgungsleitung 128c ebenfalls die Induktionsspule 20 mit Leistung.

Bei einem Betriebsverfahren für die Anordnung nach Fig. 2 ist klar, dass, abhängig von dem gewünschten Betrieb einer oder mehrerer der Induktionsspulen 14, 17 und 20, diese jeweils nach den Vorgaben einer Bedienperson mit Leistung aus den Frequenzumrichtern 27 versorgt werden. Soll ein gemeinsamer Betrieb von zwei Induktionsspulen oder drei Induktionsspulen gemeinsam erfolgen, so sind die jeweiligen Leistungen bzw. die Flächenleistungen vorteilhaft in etwa gleich. Dies kann die Bedienungseinrichtung 24 über die Frequenzumrichter 27 leicht einstellen.

Bei der Anordnung nach Fig. 3 ist ein Einzelbetrieb der Induktionsspulen 14 und 17 ebenfalls problemlos möglich über die Frequenzumrichter 127a und 127b. Soll nur eine dieser Induktionsspulen gemeinsam mit der mittleren Induktionsspule 20 betrieben werden, so schaltet die Schalteinrichtung 130 die mittlere Induktionsspule 20 dem Frequenzumrichter 127 der entsprechenden großen Induktionsspule zu für den gemeinsamen Betrieb. Sollen alle drei Induktionsspulen gemeinsam betrieben werden, so muss die mittlere Induktionsspule 20 über die Schalteinrichtung 30 einem der beiden Frequenzumrichter 127 zugeschaltet werden. Dies kann, um eine ungleichmäßige Belastung über längere Zeit hinweg auszugleichen bzw. zu mitteln, abwechselnd erfolgen. So kann also für eine bestimmte Zeit die Induktionsspule 20 dem einen Frequenzumrichter 127 zugeschaltet sein, so dass dieser gegenüber dem anderen Frequenzumrichter eine erhöhte Leistung bereitstellen muss. Nach einer bestimmten Zeit kann durch die Schalteinrichtung 130 auf den anderen Frequenzumrichter 127 gewechselt werden. Lediglich der Betrieb der mittleren Induktionsspule 20 allein ist bei der Anordnung nach Fig. 3 eigentlich nicht vorgesehen. Dies könnte dadurch gelöst werden, dass eine weitere Schalteinrichtung eine der beiden größeren Induktionsspulen innerhalb der Versorgungsleitung 128 vom Frequenzumrichter 127 abtrennt. Ein alleiniger Betrieb macht in der Regel jedoch wenig Sinn aufgrund ihrer geringen Größe.

Des weiteren ist, was aus den Fig. 2 und 3 nicht deutlich hervorgeht, jedoch vorteilhaft so realisiert ist, vorgesehen, dass die Frequenzumrichter 27 und 127 an eine einzige Netzphase eines Versorgungsnetzes bzw. einen Außenleiter angeschlossen sind. Dieser Anschluss erfolgt vorteilhaft an den Frequenzumrichtern selber.

## Patentansprüche

1. Induktionsheizeinrichtung (11) mit zwei voneinander beabstandeten, größeren Induktionsspulen (14, 17) und mindestens einer dritten kleineren Induktionsspule (20), die den Zwischenraum zwischen den größeren Induktionsspulen (14, 17) im wesentlichen einnimmt, **dadurch gekennzeichnet, dass** die Induktionsspulen (14, 17, 20) einzeln bzw. wechselseitig ansteuerbar bzw. betreibbar sind.

2. Induktionsheizeinrichtung nach Anspruch 1, **dadurch gekennzeichnet, dass** die Induktionsspulen (14, 17, 20) in etwa viereckig sind, vorzugsweise rechteckig, wobei insbesondere die größeren Induktionsspulen (14, 17) in etwa quadratisch sind.

3. Induktionsheizeinrichtung nach Anspruch 1 oder 2, **dadurch gekennzeichnet, dass** die drei Induktionsspulen (14, 17, 20) zusammen in etwa viereckige Form aufweisen, insbesondere nach Art eines Rechtecks, vorzugsweise mehr als doppelt so breit wie hoch.

4. Induktionsheizeinrichtung nach einem der vorhergehenden Ansprüche, **dadurch gekennzeichnet, dass** die beiden größeren Induktionsspulen (14, 17) gleich ausgebildet sind, insbesondere bezüglich Fläche und/oder Leistung.

5. Induktionsheizeinrichtung nach einem der vorhergehenden Ansprüche, **dadurch gekennzeichnet, dass** mehrere Generatoren bzw. Frequenzumrichter (27a-c, 127a, 127b) zur Leistungsversorgung mit gleicher Arbeitsfrequenz arbeiten zum Betrieb der Induktionsspulen (14, 17, 20).

6. Induktionsheizeinrichtung nach Anspruch 5, **dadurch gekennzeichnet, dass** jede Induktionsspule (14, 17, 20) einen eigenen Generator bzw. Frequenzumrichter (27a-c) zur Leistungsversorgung aufweist.

7. Induktionsheizeinrichtung nach einem der Ansprüche 1 bis 5, **dadurch gekennzeichnet, dass** zwei oder drei Induktionsspulen (14, 17, 20) einen gemeinsamen Generator bzw. Frequenzumrichter (127a, 127b) zur Leistungsversorgung aufweisen, vorzugsweise mit einer Schalteinrichtung (130) zum Anschließen der Induktionsspulen an den Generator.

8. Induktionsheizeinrichtung nach einem der vorhergehenden Ansprüche, dass mehrere Generatoren bzw. Frequenzumrichter (27a-c, 127a, 127b) an eine einzige Netzphase eines Versorgungsnetzes angeschlossen sind, wobei insbesondere eine Aufteilung der Phasenleistung im Verhältnis der von den Induktionsspulen (14, 17, 20) bedeckten Fläche vorgesehen ist.
